# EUROPEAN PATENT SPECIFICATION

(11) **EP 4 002 898 B1**
(45) Date of publication and mention of the grant of the patent: **18.02.2026**
(21) Application number: 20208445.5
(22) Date of filing: 18.11.2020
(51) Int. Cl.: H04W 8/20, H04W 8/18, H04W 4/50, H04W 4/80

(54) **METHOD FOR TRANSMITTING A PROFILE INFORMATION OR AT LEAST PARTS THEREOF TO A CLIENT COMMUNICATION DEVICE, SYSTEM, CLIENT COMMUNICATION DEVICE, SERVER ENTITY, PROGRAM AND COMPUTER PROGRAM PRODUCT**
VERFAHREN ZUR ÜBERTRAGUNG VON PROFILINFORMATIONEN ODER ZUMINDEST TEILEN DAVON AN EINE CLIENT-KOMMUNIKATIONSVORRICHTUNG, SYSTEM, CLIENT-KOMMUNIKATIONSVORRICHTUNG, SERVERINSTANZ, PROGRAMM UND COMPUTERPROGRAMMPRODUKT
PROCÉDÉ DE TRANSMISSION D'INFORMATIONS DE PROFIL OU AU MOINS DE PARTIES DE CELLES-CI VERS UN DISPOSITIF DE COMMUNICATION CLIENT, SYSTÈME, DISPOSITIF DE COMMUNICATION CLIENT, ENTITÉ SERVEUR, PROGRAMME ET PRODUIT PROGRAMME INFORMATIQUE

(43) Date of publication of application: 25.05.2022
(73) Proprietor: Deutsche Telekom AG, 53113 Bonn (DE)
(72) Inventor: KALINER, Stefan, 53639 Königswinter (DE)
(74) Representative: Schwöbel, Thilo K.

(56) References cited:
- US-A1- 2019 174 299
- US-A1- 2020 053 534

## Description

### BACKGROUND

The scope of the invention is defined by the appended claims.

There are more and more communication services relying on mobile communication networks, and therefore the need to reliably distribute credentials to access these networks, typically using eSIM profiles, embedded subscriber identity module profiles to the respective client communication devices.

However, the application of the GSMA eSIM standards for over-the-air (OTA) download of network operator data (i.e. the so-called eSIM profiles) is unfavorable if not impossible in case the client communication devices have limited capabilities, e.g. for internet-of-things applications, especially low-cost internet-of-things applications. Typically, such limitations exist e.g. in general complexity and especially in power consumption and bandwidth available for communication. The download of an eSIM profile (according to the GSMA eSIM standards for over-the-air download) is a comparatively extensive process which requires not only an active connection to a mobile communication network but also the use of a so-called Bootstrap profile or provisioning profile. By means of using such an active connection to a mobile communication network, the actual operative profile information is transmitted to the internet-of-things device in question. However, especially for low-cost applications or for comparatively simple internet-of-things devices, such a transmission using a Bootstrap profile or provisioning profile is not feasible due to considerations regarding costs and efficiency, especially due to memory requirements of such solutions. Additionally, such a procedure might take too much time and might consume significant parts of the battery capacity of the internet-of-things device in question.
US2020/053534 A1 (BAE JEONGTAK [KR] ET AL) 13 February 2020 (2020-02-13) relates to managing an e-subscriber indentification module, SIM. US 2019/174299 A1 (ULLAH KAZI WALI [FI] ET AL) 6 June 2019 (2019-06-06) relates to provisioning of a remote subscriber identity module.

### SUMMARY

An object of the present invention is to provide a technically simple, effective and cost effective solution for transmitting a profile information or at least parts thereof to a client communication device via a further client communication using a communication interface between the further client communication device and the client communication device, and nevertheless being able to provide a safe and secure procedure to transmit the profile information. The invention is defined by the independent claims. Further embodiments of the invention are defined by the dependent claims. Although the invention is defined by the claims only, the below embodiments, examples and aspects are present for aiding in understanding the background and advantages of the invention.

The object of the present invention is achieved by a method according to claim 1.

It is thereby advantageously possible according to the present invention that a much smaller part of the available resources of the client communication device are used for downloading (or transmitting) the needed eSIM profile information to the client communication device compared with typically used procedures, especially according to the standards defined by the GSMA (GSM Association or Global System for Mobile Communications Association).

It is conventionally known to use a GSMA-defined (GSM Association or Global System for Mobile Communications Association) method to transmit a profile information to a target device via a further device, whereby the further device provides the mobile connection via which the profile information is received and then transferred to the target device via a local interface. However, because the target device is nevertheless required to support all elements and protocols of the complex GSMA eSIM standard, this method is generally not applicable to devices with limited capabilities.

According to the present invention, it is proposed to apply a new procedure for the optimized provision of profile information (i.e. eSIM profiles) using a simplified procedure where the target device (or client communication device) only needs to have a single function to install an encrypted profile. In the simplest case, the target device (or client communication device) provides an individual identifier information (which could also be printed somewhere on the client communication device or in relation to it) and then receives an encrypted eSIM profile. The transmission of the profile (information) and the control of the loading process is done - as in the GSMA proposed method - using a further device that provides a connection to the Internet, but also in this respect, the functional requirements are greatly reduced. In particular, no additional protection of the connection between the further device (further client communication device) and the target device (client communication device) is required. The comparatively low requirements of the target device (client communication device) compared to other known methods allows the method to be applied in connection with devices having limited capabilities.

Hence, according to the present invention, the profile information or at least parts thereof is transmitted to the client communication device by means of first transmitting the profile information from a server entity to the further client communication device and from the further client communication device to the client communication device using a communication interface between the further client communication device and the client communication device. Eventually (i.e. after completing the transfer and installing and activating the profile information within the embedded subscriber identity module of the client communication device), the profile information is used in or by the embedded subscriber identity module of the client communication device to operationally communicate with a mobile communication network (for which the profile information have been transferred or transmitted) independently from the further client communication device. The client communication device and/or the embedded subscriber identity module of the client communication device comprises or is assigned to an identifier information. In order to initiate the process to transmit the profile information to the client communication device, it is only required to use this identifier information, hence this identifier information might be stored in the client communication device or it could also be only printed on the client communication device.

According to the present invention, the method comprises a first step during which the identifier information assigned to the client communication device is transmitted, by the further client communication device, to the server entity. In a second step, the profile information is transmitted, by the server entity, to the further client communication device, and in a third step, the profile information is transmitted, by the further client communication device, to the client communication device.

According to the present invention, prior to the first step, the identifier information is either transmitted, by the client communication device, to the further client communication device using the communication interface, or otherwise transmitted or provided to the further client communication device, and it is advantageously possible and preferred that the communication interface corresponds to a local interface between the further client communication device and the client communication device and corresponds to either a wireline interface or a wireless interface, especially according to or using at least one of the following technologies or standards:
-- bluetooth technology,
-- wireless local area network, WLAN, technology
-- infra red, IR, technology,
-- near field communication, NFC, technology,
-- a cable connection.

It is thereby advantageously possible that a large variety of possibilities exist how to transmit the identifier information from the client communication device to the further client communication device.

According to the present invention, it is advantageously possible and preferred that the server entity comprises or accesses the profile information to be transmitted to the further client communication device, wherein the profile information is stored in the server entity as it is to be transmitted to the further client communication device.

Thereby, it is advantageously possible to easily and effectively access the profile information and provide the profile information to the further client communication device.

According to the present invention, a certificate information, likewise assigned to the client communication device, is transmitted, by the further client communication device, to the server entity, wherein the certificate information is especially used, by the server entity to generate the profile information prior to the second step, wherein the certificate information especially corresponds to a secret key information of the client communication device and/or of the embedded subscriber identity module, the certificate information especially corresponding and/or comprising a public key information related to the secret key information.

Thereby, it is advantageously possible to enhance the security level implemented in the inventive method and system: the identifier information and the certificate information are able to be separated and the profile information generated by means of using the certificate information.

According to the present invention, it is advantageously possible and preferred that, especially prior to the first step, the certificate information is
-- either transmitted, by the client communication device, to the further client communication device,
-- or the certificate information is requested, by the further client communication device, from a certificate server entity and received by the further client communication device from the certificate server entity.

Thereby, it is advantageously possible to either store the certificate information in the client communication device or to involve a further instance such as to enhance the security level and to be able to realize a possibility to control the use of the client communication device by the certificate server entity.

According to the present invention, it is advantageously furthermore possible and preferred that in a fourth step, subsequent to the third step, the profile information is used, by the client communication device, to operatively communicate with the mobile communication network,
wherein the profile information especially is or corresponds to an embedded subscriber identity module profile information to be loaded or to be installed in the client communication device or in the embedded subscriber identity module of the client communication device,
wherein the profile information is especially related to a subscription enabling the client communication device to operatively use or attach to or register to the mobile communication network,
wherein the profile information is especially a profile information that is specific or individual to the client communication device.

It is thereby advantageously possible according to the present invention to easily and efficiently transmit the profile information to the client communication device, and be able to more quickly use the client communication device in an operative manner.

Furthermore according to an embodiment, the identifier information is specific or individual to the client communication device or to the embedded subscriber identity module, wherein the mobile communication network and/or the server entity comprises or is assigned to or is able to access a profile database and/or a profile generator,
wherein the profile database comprises, especially in encrypted form, the profile information of the client communication device and/or of the embedded subscriber identity module associated or assigned to the identifier information, especially as the profile information is to be transmitted, by the server entity, to the further client communication device,
and/or wherein the profile generator generates the profile information associated or assigned to the identifier information, the profile information especially being encrypted and the encryption key being taken from the certificate information, previously received from the further client communication device.

It is thereby advantageously possible according to the present invention to easily and efficiently transmit the profile information to the further client communication device, and from there to the client communication device, and be able to more quickly use the client communication device in an operative manner.

According to a further preferred embodiment of the present invention, in order to transmit the profile information from the server entity to the further client communication device, the second step comprises the server entity transmitting the profile information to the further client communication device in encrypted form, and/or wherein - after the profile information having been transmitted, by the further client communication device, to the client communication device - the client communication device installs and/or activates the communication profile corresponding to the profile information, especially in dependency of further parameters detected by the client communication device, especially dependent on the roaming situation of the client communication device and/or dependent on a signal strength indicator detected by the client communication device.

Thereby, it is advantageously possible to securely and confidentially transmit the identifier information and the profile information.

According to a further preferred embodiment of the present invention, the embedded subscriber identity module of the client communication device corresponds to one or a plurality of the following:
-- a removable embedded universal integrated circuit card, removable eUICC,
-- a non-removable embedded universal integrated circuit card, non-removable eUICC,
-- an integrated embedded universal integrated circuit card, integrated eUICC,
-- an integrated subscriber identity module, integrated SIM,
wherein especially the identifier information and the certificate information and the secret key information correspond to the embedded subscriber identity module, and the profile information being used in or by the embedded subscriber identity module.

It is thereby advantageously possible to realize the embedded subscriber identity module in a variety of different embodiments.

According to a further preferred embodiment of the present invention, the client communication device is a machine-to-machine communication device or a machine type communication device, especially a machine-to-machine communication device or machine type communication device being a resource-constrained device.

Furthermore, the present invention relates to a system according to claim 8.

Additionally, the present invention relates to a program according to claim 9.

Still additionally, the present invention relates to a computer-readable medium according to claim 10.

### BRIEF DESCRIPTION OF THE DRAWINGS

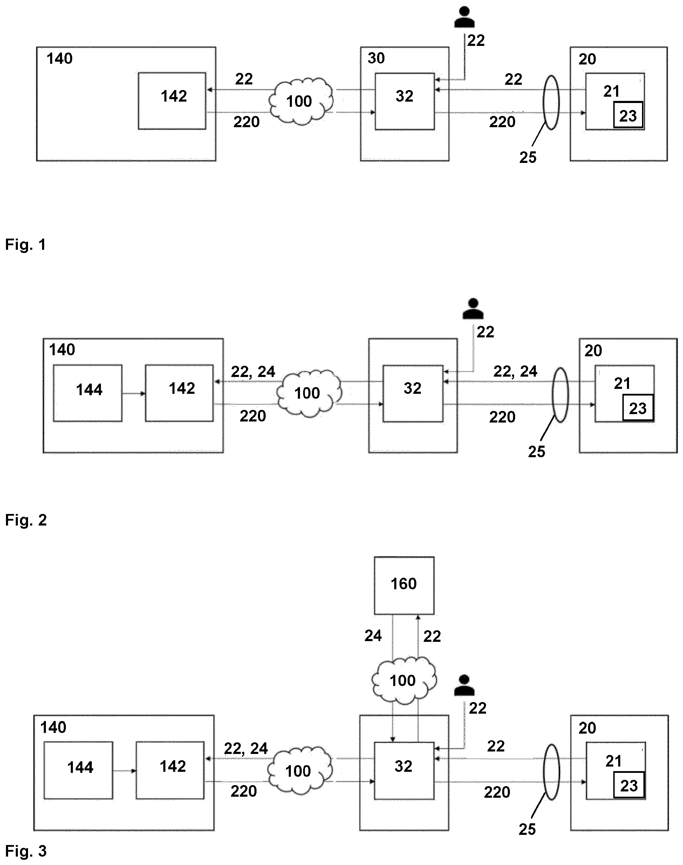

Figures 1 to 3 schematically illustrate different variants according to the present invention to transfer of profile information to a client communication device.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figures 1 to 3, the transfer of profile information to a client communication device 20 according different variants or embodiments of the present invention is schematically shown.

Regarding all embodiments of the present invention, the client communication device 20 - typically a machine-to-machine communication device or a machine type communication device (also called internet-of-things device) - is able to be connected to a further client communication device 30. The further client communication device 30 is itself connected to an access network (not specifically shown in Figure 1) of a mobile communication network 100; alternatively, the further client communication device 30 is connected via a different access possibility to get network and/or internet connectivity. The client communication device 20 typically comprises an embedded subscriber identity module 21 (or eSIM). The client communication device 20 and/or the embedded subscriber identity module 21 of the client communication device 20 comprises or is assigned to an identifier information 22, especially being specific to that specific client communication device 20 or to that specific embedded subscriber identity module 21.

According to the present invention, a profile information 220 is transmitted from a server entity 140 first to the further client communication device 30 and from the further client communication device 30 to the client communication device 20. Between the further client communication device 30 and the client communication device 20, a communication interface 25 is used to transport (or to transmit) the profile information 220 from the further client communication device 30 to the client communication device 20. The profile information 220 is used in or by the embedded subscriber identity module 21 of the client communication device 20, to operationally or operatively communicate with a mobile communication network 100 independently from the further client communication device 30; however, this stage (of the client communication device 20 communicating (operatively) directly with the mobile communication network 100) is not specifically shown in Figures 1 to 3.

According to the present invention, the client communication device 20 and/or the embedded subscriber identity module 21 of the client communication device 20 comprises or is assigned to an identifier information 22, and the inventive method to transmit the profile information 220 to the client communication device 20 comprises, in a first step, transmitting, by the further client communication device 30, the identifier information 22 (assigned to the client communication device 20) to the server entity 140, transmitting, by the server entity 140 and in a second step, the profile information 220 to the further client communication device 30, and transmitting, by the further client communication device 30 and in a third step, the profile information 220 to the client communication device 20.

In order for the further client communication device 30 being able to transmit the identifier information 22 (assigned to the client communication device 20) to the server entity 140, the identifier information 22 needs to reach the further client communication device 30 (i.e. the further client communication device 30 needs to receive the identifier information 22). Hence, prior to the first step, the identifier information 22 is either transmitted, by the client communication device 20, to the further client communication device 30, using the communication interface 25, or the identifier information 22 is otherwise transmitted or provided to the further client communication device 30. This is schematically indicated, in Figures 1 to 3, by means of, e.g., a person providing the identifier information 22 to the further client communication device 30. For example, the identifier information 22 could be printed (or otherwise be accessible to a user or operator of the client communication device 20) on (e.g. a housing or the like of) or in connection to the client communication device 20, or be accessible via or as part of an operation document related to the client communication device 20.

In order to conduct the handling (and transmission and/or reception) of both the identifier information 22 and the profile information 220, the further client communication device 30 preferably comprises a loader application 32.

Hence, the communication interface 25 might only be used to transmit the profile information 220, i.e. in the direction from the further client communication device 30 to the client communication device 20 (in which case the identifier information 22 is transmitted or provided to the further client communication device 30 via another route). Alternatively, the communication interface 25 might be used to transmit both the identifier information 22 (in the direction from the client communication device 20 to the further client communication device 30), and the profile information (in the direction from the further client communication device 30 to the client communication device 20); however, in this latter case, either the same part or kind of communication interface 25 might be used for both the identifier information 22 and the profile information 220, or different parts of the communication interface 25 might be used, e.g. Bluetooth technology to transmit the identifier information 22, and NFC technology to transmit the profile information 220, or vice versa. In all such cases of using the communication interface 25, the communication interface 25 especially corresponds to or comprises a local interface between the further client communication device 30 and the client communication device 20 and corresponds to or comprises (as its part or parts) one wireline interface or a plurality of wireline interfaces or one wireless interface or a plurality of wireless interfaces, especially according to or using at least one of the following technologies or standards: bluetooth technology, wireless local area network, WLAN, technology, infra red, IR, technology, near field communication, NFC, technology, and a cable connection.

According to the embodiment of the present invention shown in Figure 1, the server entity 140 comprises or accesses the profile information 220 to be transmitted to the further client communication device 30, the profile information 220 being stored in the server entity 140 as it is to be transmitted to the further client communication device 30.

Typically, according to the present invention, in addition to the identifier information 22, a certificate information 24 is also assigned to the client communication device 20, and preferably stored in the client communication device 20, especially in connection to a secret key information 23. The certificate information 24 might also be transmitted, by the further client communication device 30, to the server entity 140, but - according to the embodiment shown in Figure 1 - not necessarily.

According to both embodiments of the present invention shown in Figures 2 and 3, in addition to the identifier information 22, the certificate information 24 is also assigned to the client communication device 20, and the certificate information 24 is stored in the client communication device 20, preferably inside of the embedded subscriber identity module 21. According both these embodiments of the present invention, the certificate information 24 is - in addition to the identifier information 22 - likewise transmitted, by the further client communication device 30, to the server entity 140 (and the certificate information 24 also needs to be transmitted from the client communication device 20 to the further client communication device 30), wherein the certificate information 24 is especially used, by the server entity 140 to generate the profile information 220 prior to the second step. Especially, the certificate information 24 corresponds to the secret key information 23 of the client communication device 20 and/or of the embedded subscriber identity module 21, the certificate information 24 especially corresponding and/or comprising a public key information related to the secret key information 23.
Especially, the identifier information 22 is specific or individual to the client communication device 20 or to the embedded subscriber identity module 21, and the mobile communication network 100 and/or the server entity 140 comprises or is assigned to or is able to access a profile database 142 and/or a profile generator 144. The profile database 142 comprises, especially in encrypted form, the profile information 220 of the client communication device 20 and/or of the embedded subscriber identity module 21 associated or assigned to the identifier information 22, especially as the profile information 220 is to be transmitted, by the server entity 140, to the further client communication device 30. The profile generator 144 is able to generate, especially on request from the server entity 140, the profile information 220 associated or assigned to the identifier information 22, wherein the profile information 220 is especially encrypted and the encryption key being taken from the certificate information 24, previously received from the further client communication device 30.

The difference between the embodiments shown in Figure 2 and 3 is the following: According to the embodiment shown in Figure 2, the certificate information 24 is transmitted, especially prior to the first step, by the client communication device 20, to the further client communication device 30, whereas according to the embodiment shown in Figure 3, the certificate information 24 is requested, by the further client communication device 30, from a certificate server entity 160 and received by the further client communication device 30 from the certificate server entity 160.

Typically according to all embodiments of the present invention, each client communication device 20 is assigned an individual ID (identifier information 22) and an individual PKI key pair consisting of a public key K_{pub} and a secret key Kₚᵣᵢᵥ, with at least the Kₚᵣᵢᵥ being securely stored in the client communication device 20 (as the secret key information 23). The corresponding K_{pub} is available in the form of a certificate cert (or certificate information 24) either in the further client communication device 30 or in an external cert database (certificate server entity 160), e.g. at the manufacturer of the further client communication device 30. The ID (identifier information 22) is either also stored in the client communication device 20 or printed on the back of the client communication device 20 and easily accessible to the user.

Profiles (i.e. profile information 220 for a plurality of client communication devices 20) are able to be created with a profile generator 144, but they need to be individually encrypted for the client communication devices 20. The encryption is either done offline (i.e. before the profile information is created) or online (i.e. when the profile is retrieved).
Offline (cf. Figure 1): Prepared eSIM profiles (i.e. profile information) are encrypted with the K_{pubs} of the client communication devices 20 (a corresponding profile generator receives the client communication devices' certificates beforehand) and stored in a database with the corresponding IDs (identifier information 22). The profile database now contains encrypted profiles encP(ID); the target device ID is sufficient for retrieval. Online (cf. Figure 2 and 3): Each retrieval contains the ID (identifier information 22) and the cert (certificate information 24) of the respective client communication device 20. A matching profile is only encrypted by the profile generator 144 when it is retrieved with the K_{pub} and delivered directly.
The profile is loaded via the further client communication device 30 which is connected to the client communication device 20 via a local interface (communication interface 25). The connection is made e.g. by a cable or a WLAN or Bluetooth radio interface or an IR interface. On the further client communication device 30, there is typically a special charging program (loader application 32) for the client communication device 20, e.g. in the form of a smartphone app. The charging program (loader application 32) communicates with the client communication device 20 as well as with the profile server 144 (profile database or profile generator) or the server entity 140, and in a certain variant (cf. Figure 3) also with the Cert database (certificate server entity 160). In addition, the loading program (loader application 32) can be part of a service application through which the owner of the client communication device 20 communicates with a portal of the device manufacturer or service provider, for example, and receives associated services.

To load the profile information 220, a first communication channel (communication interface 25) is established between the loader (loader application 32) on the further client communication device 30 and the eSIM (embedded subscriber identity module 21) of the client communication device 20. The three process variants shown in Figures 1, 2 and 3 are explained in more detail in the following.
1. Encrypted profiles in stock (Fig. 1):
   -- The loading program (loader application 32) reads the ID (identifier information 22) from the client communication device 20 or it is entered manually by the user;
   -- The loading program connects to the remote profile server (server entity 140 or profile database 142) via a second communication channel. The profile server (server entity 140 or profile database 142) contains a database with already encrypted profiles. This connection is preferably made via the Internet.
   -- The loading program (loader application 32) retrieves an encrypted profile encP(ID) with the ID from the profile database 142.
   -- The loading program (loader application 32) transfers the encrypted profile encP(ID) to the eSIM of the client communication device 20 via the first communication channel (communication interface 25)
   -- The eSIM decrypts and installs the received profile (profile information 220). Encrypted profiles are already prepared for all target devices (client communication devices 20) in the profile database (offline). This is the simplest variant with the lowest communication requirements. The provision of the encP(ID) may be dependent on prior registration and/or conclusion of a contract and/or payment. The loading program (loader application 32) and the profile server (server entity 140) enter into a corresponding dialog for this purpose.
2. Cert from target device, profile encryption on request (Fig. 2):
   -- The loading program (loader application 32) reads the identifier information 22 and the Cert(ID) (certificate information 24) from the client communication device 20 (also called target device), or the identifier information 22 is entered manually by the user.
   -- The loader (loader application 32) connects to a remote profile server (server entity 140) via a second communication channel. The profile server contains a profile generator 144 that generates or maintains matching profiles and encrypts them using the target device Cert(ID) (this generation being done online). This connection is preferably made via the Internet.
   -- The loader program (loader application 32) uses the identifier information 22 and the Cert(ID) (certificate information 24) to retrieve an encrypted profile encP(ID) from the profile generator; the profile is only encrypted in this step.
   -- The loading program transfers the encrypted profile encP(ID) to the eSIM of the client communication device 20 (target device) via the first communication channel (communication interface 25).
   -- The eSIM decrypts and installs the received profile (profile information 220). The encrypted profiles are generated or encrypted at runtime. Profiles are only "consumed" when they are requested. The necessary cert (certificate information 24) is provided by the client communication device (target device). The provision of the encP(ID) can be dependent on a previous registration and/or conclusion of a contract and/or payment. The loading program and the profile server enter a corresponding dialog.
3. Cert from a database, profile encryption on request (Fig. 3):
   -- The loading program reads the ID from the target device or it is entered manually by the user.
   -- Via a second communication channel the loader connects to a database containing the cert of the target device's eSIM (certificate server entity 160). This connection is preferably made via the Internet.
   -- The loader program uses the ID to retrieve the cert(ID) of the target device' eSIM (client communication device 20) from the cert database.
   -- Via a third communication channel the loader (loader application 32) connects to a remote profile server (server entity 140). The profile server contains a profile generator 144 that generates or maintains suitable profiles and encrypts them (online) using the Cert(ID) for client communication devices (target devices). This connection is preferably made via the Internet.
   -- The loader program retrieves an encrypted profile encP(ID) with the ID and the cert from the profile generator 144. The profile (profile information 220) is only encrypted in this step.
   -- The loading program transfers the encrypted profile encP(ID) to the eSIM of the client communication device 20 (target device) via the first communication channel (communication interface 25).
   -- The eSIM decrypts and installs the received profile

Again, the encrypted profiles are not created or encrypted until runtime. Profiles are only "consumed" when they are requested. The necessary cert (certificate information 24) is supplied by a special database, i.e. the certificate server entity 160. This can be part of a service portal of a service provider who provides both the client communication device 20 (target device) and the associated loading program (loader application 32) while the profile server (server entity 140) is operated by an independent party.

Also the provision of the Cert(ID) may be subject to prior registration and/or conclusion of a contract and/or payment. The loading program and the Cert database (certificate server entity 160) will enter into a corresponding dialog. Without the Cert (certificate information 24) no profile (profile information 220) can be obtained from the profile server (server entity 140). According to a preferred embodiment of the invention, the Cert-database (i.e. the certificate server entity 160) can be part of the profile server (i.e. the server entity 140).

Furthermore, the selection or generation of profiles (profile information 220) can be done depending on further information provided by the client communication device 20 (target device) or the user.

## Claims

1. Method for transmitting a profile information (220) or at least parts thereof to a client communication device (20), the profile information (220) being transmitted from a server entity (140) to a further client communication device (30) and from the further client communication device (30) to the client communication device (20) using a communication interface (25) between the further client communication device (30) and the client communication device (20), wherein the profile information (220) is used in or by an embedded subscriber identity module (21) of the client communication device (20), to operationally communicate with a mobile communication network (100) independently from the further client communication device (30), wherein the client communication device (20) and/or the embedded subscriber identity module (21) of the client communication device (20) is assigned to an identifier information (22), wherein the identifier information (22) is specific or individual to the client communication device (20) or to the embedded subscriber identity module (21),
wherein the method comprises the following steps:
-- in a first step, the identifier information (22) assigned to the client communication device (20) and a certificate information (24) assigned to the client communication device (20) are transmitted, by the further client communication device (30), to the server entity (140), wherein the certificate information (24) corresponds to a secret key information (23) of the client communication device (20) and/or of the embedded subscriber identity module (21), the certificate information (24) corresponding and/or comprising a public key information related to the secret key information (23), wherein the server entity (140) comprises or is assigned to or is able to access a profile generator (144), wherein the profile generator (144) generates the profile information (220) associated or assigned to the identifier information (22), the profile information (220) being encrypted and the encryption key being taken from the certificate information (24), previously received from the further client communication device (30),
-- in a second step, the encrypted profile information (220) is transmitted, by the server entity (140), to the further client communication device (30),
-- in a third step, the encrypted profile information (220) is transmitted, by the further client communication device (30), to the client communication device (20), wherein, prior to the first step, the identifier information (22) is either transmitted, by the client communication device (20), to the further client communication device (30) using the communication interface (25), or otherwise transmitted or provided to the further client communication device (30), wherein the certificate information (24) is either transmitted, by the client communication device (20), to the further client communication device (30), or the certificate information (24) is requested, by the further client communication device (30), from a certificate server entity (160) and received by the further client communication device (30) from the certificate server entity (160).

2. Method according to claim 1, wherein the communication interface (25) corresponds to a local interface between the further client communication device (30) and the client communication device (20) and corresponds to either a wireline interface or a wireless interface, especially according to or using at least one of the following technologies or standards:
-- bluetooth technology,
-- wireless local area network, WLAN, technology
-- infra red, IR, technology,
-- near field communication, NFC, technology,
-- a cable connection.

3. Method according to one of the preceding claims, wherein the server entity (140) comprises or accesses the profile information (220) to be transmitted to the further client communication device (30), wherein the profile information (220) is stored in the server entity (140) as it is to be transmitted to the further client communication device (30).

4. Method according to one of the preceding claims, wherein in a fourth step, subsequent to the third step, the profile information (220) is used, by the client communication device (20), to operatively communicate with the mobile communication network (100),
wherein the profile information (220) especially is or corresponds to an embedded subscriber identity module profile information to be loaded or to be installed in the client communication device (20) or in the embedded subscriber identity module (21) of the client communication device (20),
wherein the profile information (220) is especially related to a subscription enabling the client communication device (20) to operatively use or attach to or register to the mobile communication network (100),
wherein the profile information (220) is especially a profile information that is specific or individual to the client communication device (20).

5. Method according to one of the preceding claims, wherein, in order to transmit the profile information (220) from the server entity (140) to the further client communication device (30), the second step comprises the server entity (140) transmitting the profile information (220) to the further client communication device (30) in encrypted form,
and/or wherein - after the profile information (220) having been transmitted, by the further client communication device (30), to the client communication device (20) - the client communication device (20) installs and/or activates the communication profile corresponding to the profile information (220), especially in dependency of further parameters detected by the client communication device (20), especially dependent on the roaming situation of the client communication device (20) and/or dependent on a signal strength indicator detected by the client communication device (20).

6. Method according to one of the preceding claims, wherein the embedded subscriber identity module (21) of the client communication device (20) corresponds to one or a plurality of the following:
-- a removable embedded universal integrated circuit card, removable eUICC,
-- a non-removable embedded universal integrated circuit card, non-removable eUICC,
-- an integrated embedded universal integrated circuit card, integrated eUICC,
-- an integrated subscriber identity module, integrated SIM,
wherein especially the identifier information (22) and the certificate information (24) and the secret key information (23) correspond to the embedded subscriber identity module (21), and the profile information (220) being used in or by the embedded subscriber identity module (21).

7. Method according to one of the preceding claims, wherein the client communication device (20) is a machine-to-machine communication device or a machine type communication device, especially a machine-to-machine communication device or machine type communication device being a resource-constrained device.

8. System for transmitting a profile information (220) or at least parts thereof to a client communication device (20), the profile information (220) being transmitted from a server entity (140) to a further client communication device (30) and from the further client communication device (30) to the client communication device (20) using a communication interface (25) between the further client communication device (30) and the client communication device (20), wherein the profile information (220) is used in or by an embedded subscriber identity module (21) of the client communication device (20), to operationally communicate with a mobile communication network (100) independently from the further client communication device (30), wherein the client communication device (20) and/or the embedded subscriber identity module (21) of the client communication device (20) is assigned to an identifier information (22), wherein the system comprises the mobile communication network (100), the server entity (140), the client communication device (20), and the further client communication device (30), wherein the identifier information (22) is specific or individual to the client communication device (20) or to the embedded subscriber identity module (21), wherein the system is configured such that:
-- the identifier information (22) is either transmitted, by the client communication device (20), to the further client communication device (30) using the communication interface (25), or otherwise transmitted or provided to the further client communication device (30),
-- the identifier information (22) assigned to the client communication device (20) and a certificate information (24) assigned to the client communication device (20) are transmitted, by the further client communication device (30), to the server entity (140), wherein the certificate information (24) is either transmitted, by the client communication device (20), to the further client communication device (30), or the certificate information (24) is requested, by the further client communication device (30), from a certificate server entity (160) and received by the further client communication device (30) from the certificate server entity (160), wherein the certificate information (24) corresponds to a secret key information (23) of the client communication device (20) and/or of the embedded subscriber identity module (21), the certificate information (24) corresponding and/or comprising a public key information related to the secret key information (23), wherein the server entity (140) comprises or is assigned to or is able to access a profile generator (144), wherein the profile generator (144) generates the profile information (220) associated or assigned to the identifier information (22), the profile information (220) being encrypted and the encryption key being taken from the certificate information (24), previously received from the further client communication device (30),
-- the encrypted profile information (220) is transmitted, by the server entity (140), to the further client communication device (30),
-- the encrypted profile information (220) is transmitted, by the further client communication device (30), to the client communication device (20).

9. Program comprising a computer readable program code, which, when executed by a system comprising a client communication device (20), a further client communication device (30), a server entity (140), a profile generator (144), and a certificate server entity (160), is configured to perform the method of any one of claims 1-7.

10. Computer-readable medium comprising instructions which when executed by a system comprising a client communication device (20), a further client communication device (30), a server entity (140), a profile generator (144), and a certificate server entity (160), cause said system to perform the method according to any one of claims 1 to 7.

## Patentansprüche

1. Verfahren zum Übertragen einer Profilinformation (220) oder zumindest von Teilen davon an ein Client-Kommunikationsgerät (20), wobei die Profilinformation (220) von einer Server-Entität (140) an ein weiteres Client-Kommunikationsgerät (30) und von dem weiteren Client-Kommunikationsgerät (30) an das Client-Kommunikationsgerät (20) unter Verwendung einer Kommunikationsschnittstelle (25) zwischen dem weiteren Client-Kommunikationsgerät (30) und dem Client-Kommunikationsgerät (20) übertragen wird, wobei die Profilinformation (220) in oder von einem eingebetteten Teilnehmeridentitätsmodul (21) des Client-Kommunikationsgeräts (20) verwendet wird, um betriebsmäßig mit einem Mobilfunknetz (100) unabhängig von dem weiteren Client-Kommunikationsgerät (30) zu kommunizieren, wobei das Client-Kommunikationsgerät (20) und/oder das eingebettete Teilnehmeridentitätsmodul (21) des Client-Kommunikationsgeräts (20) einer Identifikationsinformation (22) zugeordnet ist, wobei die Identifikationsinformation (22) spezifisch oder individuell für das Client-Kommunikationsgerät (20) oder für das eingebettete Teilnehmeridentitätsmodul (21) ist, wobei das Verfahren die folgenden Schritte umfasst:
-- in einem ersten Schritt werden die dem Client-Kommunikationsgerät (20) zugeordnete Identifikationsinformation (22) und eine dem Client-Kommunikationsgerät (20) zugeordnete Zertifikatsinformation (24) von dem weiteren Client-Kommunikationsgerät (30) an die Server-Entität (140) übertragen, wobei die Zertifikatsinformation (24) einer geheimen Schlüsselinformation (23) des Client-Kommunikationsgeräts (20) und/oder des eingebetteten Teilnehmeridentitätsmoduls (21) entspricht, wobei die Zertifikatsinformation (24) einer öffentlichen Schlüsselinformation entspricht und/oder diese umfasst, die sich auf die geheime Schlüsselinformation (23) bezieht, wobei die Server-Entität (140) einen Profilgenerator (144) umfasst oder diesem zugeordnet ist oder auf diesen zugreifen kann, wobei der Profilgenerator (144) die der Identifikationsinformation (22) zugeordnete oder zugewiesene Profilinformation (220) erzeugt, wobei die Profilinformation (220) verschlüsselt wird und der Verschlüsselungsschlüssel aus der Zertifikatsinformation (24) entnommen wird, die zuvor von dem weiteren Client-Kommunikationsgerät (30) empfangen wurde,
-- in einem zweiten Schritt wird die verschlüsselte Profilinformation (220) von der Server-Entität (140) an das weitere Client-Kommunikationsgerät (30) übertragen,
-- in einem dritten Schritt wird die verschlüsselte Profilinformation (220) von dem weiteren Client-Kommunikationsgerät (30) an das Client-Kommunikationsgerät (20) übertragen, wobei vor dem ersten Schritt die Identifikationsinformation (22) entweder von dem Client-Kommunikationsgerät (20) an das weitere Client-Kommunikationsgerät (30) unter Verwendung der Kommunikationsschnittstelle (25) übertragen wird oder anderweitig an das weitere Client-Kommunikationsgerät (30) übertragen oder bereitgestellt wird, wobei die Zertifikatsinformation (24) entweder von dem Client-Kommunikationsgerät (20) an das weitere Client-Kommunikationsgerät (30) übertragen wird, oder die Zertifikatsinformation (24) von dem weiteren Client-Kommunikationsgerät (30) von einer Zertifikatsserver-Entität (160) angefordert und von dem weiteren Client-Kommunikationsgerät (30) von der Zertifikatsserver-Entität (160) empfangen wird.

2. Verfahren nach Anspruch 1, wobei die Kommunikationsschnittstelle (25) einer lokalen Schnittstelle zwischen dem weiteren Client-Kommunikationsgerät (30) und dem Client-Kommunikationsgerät (20) entspricht und entweder einer drahtgebundenen Schnittstelle oder einer drahtlosen Schnittstelle entspricht, insbesondere gemäß oder unter Verwendung mindestens einer der folgenden Technologien oder Standards:
-- Bluetooth-Technologie,
-- drahtloses lokales Netzwerk, WLAN, Technologie
-- Infrarot, IR, Technologie,
-- Nahfeldkommunikation, NFC, Technologie,
-- eine Kabelverbindung.

3. Verfahren nach einem der vorhergehenden Ansprüche, wobei die Server-Entität (140) die Profilinformation (220) umfasst oder auf diese zugreift, die an das weitere Client-Kommunikationsgerät (30) übertragen werden soll, wobei die Profilinformation (220) in der Server-Entität (140) so gespeichert ist, wie sie an das weitere Client-Kommunikationsgerät (30) übertragen werden soll.

4. Verfahren nach einem der vorhergehenden Ansprüche, wobei in einem vierten Schritt, nachfolgend auf den dritten Schritt, die Profilinformation (220) von dem Client-Kommunikationsgerät (20) verwendet wird, um betriebsmäßig mit dem Mobilfunknetz (100) zu kommunizieren, wobei die Profilinformation (220) insbesondere einer eingebetteten Teilnehmeridentitätsmodul-Profilinformation entspricht oder diese darstellt, die in das Client-Kommunikationsgerät (20) oder in das eingebettete Teilnehmeridentitätsmodul (21) des Client-Kommunikationsgeräts (20) geladen oder installiert werden soll, wobei sich die Profilinformation (220) insbesondere auf ein Abonnement bezieht, das es dem Client-Kommunikationsgerät (20) ermöglicht, das Mobilfunknetz (100) betriebsmäßig zu nutzen oder sich an dieses anzumelden oder bei diesem zu registrieren, wobei die Profilinformation (220) insbesondere eine Profilinformation ist, die spezifisch oder individuell für das Client-Kommunikationsgerät (20) ist.

5. Verfahren nach einem der vorhergehenden Ansprüche, wobei, um die Profilinformation (220) von der Server-Entität (140) an das weitere Client-Kommunikationsgerät (30) zu übertragen, der zweite Schritt umfasst, dass die Server-Entität (140) die Profilinformation (220) in verschlüsselter Form an das weitere Client-Kommunikationsgerät (30) überträgt, und/oder wobei - nachdem die Profilinformation (220) von dem weiteren Client-Kommunikationsgerät (30) an das Client-Kommunikationsgerät (20) übertragen worden ist - das Client-Kommunikationsgerät (20) das Kommunikationsprofil, das der Profilinformation (220) entspricht, installiert und/oder aktiviert, insbesondere in Abhängigkeit von weiteren Parametern, die von dem Client-Kommunikationsgerät (20) erfasst werden, insbesondere abhängig von der Roaming-Situation des Client-Kommunikationsgeräts (20) und/oder abhängig von einem Signalstärkeindikator, der von dem Client-Kommunikationsgerät (20) erfasst wird.

6. Verfahren nach einem der vorhergehenden Ansprüche, wobei das eingebettete Teilnehmeridentitätsmodul (21) des Client-Kommunikationsgeräts (20) einem oder mehreren der folgenden entspricht:
-- einer entfernbaren eingebetteten universellen integrierten Schaltkreiskarte, entfernbare eUICC,
-- einer nicht entfernbaren eingebetteten universellen integrierten Schaltkreiskarte, nicht entfernbare eUICC,
-- einer integrierten eingebetteten universellen integrierten Schaltkreiskarte, integrierte eUICC,
-- einem integrierten Teilnehmeridentitätsmodul, integrierte SIM, wobei insbesondere die Identifikationsinformation (22) und die Zertifikatsinformation (24) und die geheime Schlüsselinformation (23) dem eingebetteten Teilnehmeridentitätsmodul (21) entsprechen und die Profilinformation (220) in oder von dem eingebetteten Teilnehmeridentitätsmodul (21) verwendet wird.

7. Verfahren nach einem der vorhergehenden Ansprüche, wobei das Client-Kommunikationsgerät (20) ein Maschine-zu-Maschine-Kommunikationsgerät oder ein Maschinentyp-Kommunikationsgerät ist, insbesondere ein Maschine-zu-Maschine-Kommunikationsgerät oder Maschinentyp-Kommunikationsgerät, das ein ressourcenbeschränktes Gerät ist.

8. System zum Übertragen einer Profilinformation (220) oder zumindest von Teilen davon an ein Client-Kommunikationsgerät (20), wobei die Profilinformation (220) von einer Server-Entität (140) an ein weiteres Client-Kommunikationsgerät (30) und von dem weiteren Client-Kommunikationsgerät (30) an das Client-Kommunikationsgerät (20) unter Verwendung einer Kommunikationsschnittstelle (25) zwischen dem weiteren Client-Kommunikationsgerät (30) und dem Client-Kommunikationsgerät (20) übertragen wird, wobei die Profilinformation (220) in oder von einem eingebetteten Teilnehmeridentitätsmodul (21) des Client-Kommunikationsgeräts (20) verwendet wird, um betriebsmäßig mit einem Mobilfunknetz (100) unabhängig von dem weiteren Client-Kommunikationsgerät (30) zu kommunizieren, wobei das Client-Kommunikationsgerät (20) und/oder das eingebettete Teilnehmeridentitätsmodul (21) des Client-Kommunikationsgeräts (20) einer Identifikationsinformation (22) zugeordnet ist, wobei das System das Mobilfunknetz (100), die Server-Entität (140), das Client-Kommunikationsgerät (20) und das weitere Client-Kommunikationsgerät (30) umfasst, wobei die Identifikationsinformation (22) spezifisch oder individuell für das Client-Kommunikationsgerät (20) oder für das eingebettete Teilnehmeridentitätsmodul (21) ist, wobei das System so konfiguriert ist, dass:
-- die Identifikationsinformation (22) entweder von dem Client-Kommunikationsgerät (20) an das weitere Client-Kommunikationsgerät (30) unter Verwendung der Kommunikationsschnittstelle (25) übertragen wird oder anderweitig an das weitere Client-Kommunikationsgerät (30) übertragen oder bereitgestellt wird,
-- die dem Client-Kommunikationsgerät (20) zugeordnete Identifikationsinformation (22) und eine dem Client-Kommunikationsgerät (20) zugeordnete Zertifikatsinformation (24) von dem weiteren Client-Kommunikationsgerät (30) an die Server-Entität (140) übertragen werden, wobei die Zertifikatsinformation (24) entweder von dem Client-Kommunikationsgerät (20) an das weitere Client-Kommunikationsgerät (30) übertragen wird, oder die Zertifikatsinformation (24) von dem weiteren Client-Kommunikationsgerät (30) von einer Zertifikatsserver-Entität (160) angefordert und von dem weiteren Client-Kommunikationsgerät (30) von der Zertifikatsserver-Entität (160) empfangen wird, wobei die Zertifikatsinformation (24) einer geheimen Schlüsselinformation (23) des Client-Kommunikationsgeräts (20) und/oder des eingebetteten Teilnehmeridentitätsmoduls (21) entspricht, wobei die Zertifikatsinformation (24) einer öffentlichen Schlüsselinformation entspricht und/oder diese umfasst, die sich auf die geheime Schlüsselinformation (23) bezieht, wobei die Server-Entität (140) einen Profilgenerator (144) umfasst oder diesem zugeordnet ist oder auf diesen zugreifen kann, wobei der Profilgenerator (144) die der Identifikationsinformation (22) zugeordnete oder zugewiesene Profilinformation (220) erzeugt, wobei die Profilinformation (220) verschlüsselt wird und der Verschlüsselungsschlüssel aus der Zertifikatsinformation (24) entnommen wird, die zuvor von dem weiteren Client-Kommunikationsgerät (30) empfangen wurde,
**--** die verschlüsselte Profilinformation (220) von der Server-Entität (140) an das weitere Client-Kommunikationsgerät (30) übertragen wird,
**--** die verschlüsselte Profilinformation (220) von dem weiteren Client-Kommunikationsgerät (30) an das Client-Kommunikationsgerät (20) übertragen wird.

9. Programm, umfassend einen computerlesbaren Programmcode, der, wenn er von einem System ausgeführt wird, das ein Client-Kommunikationsgerät (20), ein weiteres Client-Kommunikationsgerät (30), eine Server-Entität (140), einen Profilgenerator (144) und eine Zertifikatsserver-Entität (160) umfasst, dazu konfiguriert ist, das Verfahren nach einem der Ansprüche 1-7 durchzuführen.

10. Computerlesbares Medium, umfassend Anweisungen, die, wenn sie von einem System ausgeführt werden, das ein Client-Kommunikationsgerät (20), ein weiteres Client-Kommunikationsgerät (30), eine Server-Entität (140), einen Profilgenerator (144) und eine Zertifikatsserver-Entität (160) umfasst, bewirken, dass das System das Verfahren nach einem der Ansprüche 1 bis 7 durchführt.

## Revendications

1. Procédé de transmission d'une information de profil (220) ou d'au moins des parties de celle-ci à un dispositif de communication client (20), l'information de profil (220) étant transmise d'une entité serveur (140) à un autre dispositif de communication client (30) et de l'autre dispositif de communication client (30) au dispositif de communication client (20) en utilisant une interface de communication (25) entre l'autre dispositif de communication client (30) et le dispositif de communication client (20), dans lequel l'information de profil (220) est utilisée dans ou par un module d'identité d'abonné intégré (21) du dispositif de communication client (20), pour communiquer de manière opérationnelle avec un réseau de communication mobile (100) indépendamment de l'autre dispositif de communication client (30), dans lequel le dispositif de communication client (20) et/ou le module d'identité d'abonné intégré (21) du dispositif de communication client (20) est attribué à une information d'identification (22), dans lequel l'information d'identification (22) est spécifique ou individuelle au dispositif de communication client (20) ou au module d'identité d'abonné intégré (21), dans lequel le procédé comprend les étapes suivantes :
**--** dans une première étape, l'information d'identification (22) attribuée au dispositif de communication client (20) et une information de certificat (24) attribuée au dispositif de communication client (20) sont transmises, par l'autre dispositif de communication client (30), à l'entité serveur (140), dans lequel l'information de certificat (24) correspond à une information de clé secrète (23) du dispositif de communication client (20) et/ou du module d'identité d'abonné intégré (21), l'information de certificat (24) correspondant et/ou comprenant une information de clé publique liée à l'information de clé secrète (23), dans lequel l'entité serveur (140) comprend ou est attribuée à ou est capable d'accéder à un générateur de profil (144), dans lequel le générateur de profil (144) génère l'information de profil (220) associée ou attribuée à l'information d'identification (22), l'information de profil (220) étant chiffrée et la clé de chiffrement étant tirée de l'information de certificat (24), précédemment reçue de l'autre dispositif de communication client (30),
-- dans une deuxième étape, l'information de profil chiffrée (220) est transmise, par l'entité serveur (140), à l'autre dispositif de communication client (30),
**--** dans une troisième étape, l'information de profil chiffrée (220) est transmise, par l'autre dispositif de communication client (30), au dispositif de communication client (20), dans lequel, avant la première étape, l'information d'identification (22) est soit transmise, par le dispositif de communication client (20), à l'autre dispositif de communication client (30) en utilisant l'interface de communication (25), soit autrement transmise ou fournie à l'autre dispositif de communication client (30), dans lequel l'information de certificat (24) est soit transmise, par le dispositif de communication client (20), à l'autre dispositif de communication client (30), soit l'information de certificat (24) est demandée, par l'autre dispositif de communication client (30), à une entité serveur de certificat (160) et reçue par l'autre dispositif de communication client (30) de l'entité serveur de certificat (160).

2. Procédé selon la revendication 1, dans lequel l'interface de communication (25) correspond à une interface locale entre l'autre dispositif de communication client (30) et le dispositif de communication client (20) et correspond soit à une interface filaire soit à une interface sans fil, en particulier selon ou utilisant au moins l'une des technologies ou normes suivantes :
-- technologie bluetooth,
-- technologie de réseau local sans fil, WLAN,
-- technologie infrarouge, IR,
-- technologie de communication en champ proche, NFC,
-- une connexion par câble.

3. Procédé selon l'une des revendications précédentes, dans lequel l'entité serveur (140) comprend ou accède à l'information de profil (220) à transmettre à l'autre dispositif de communication client (30), dans lequel l'information de profil (220) est stockée dans l'entité serveur (140) telle qu'elle doit être transmise à l'autre dispositif de communication client (30).

4. Procédé selon l'une des revendications précédentes, dans lequel dans une quatrième étape, postérieure à la troisième étape, l'information de profil (220) est utilisée, par le dispositif de communication client (20), pour communiquer de manière opérationnelle avec le réseau de communication mobile (100), dans lequel l'information de profil (220) est en particulier ou correspond à une information de profil de module d'identité d'abonné intégré à charger ou à installer dans le dispositif de communication client (20) ou dans le module d'identité d'abonné intégré (21) du dispositif de communication client (20), dans lequel l'information de profil (220) est en particulier liée à un abonnement permettant au dispositif de communication client (20) d'utiliser de manière opérationnelle ou de s'attacher à ou de s'enregistrer sur le réseau de communication mobile (100), dans lequel l'information de profil (220) est en particulier une information de profil qui est spécifique ou individuelle au dispositif de communication client (20).

5. Procédé selon l'une des revendications précédentes, dans lequel, afin de transmettre l'information de profil (220) de l'entité serveur (140) à l'autre dispositif de communication client (30), la deuxième étape comprend l'entité serveur (140) transmettant l'information de profil (220) à l'autre dispositif de communication client (30) sous forme chiffrée, et/ou dans lequel -- après que l'information de profil (220) ait été transmise, par l'autre dispositif de communication client (30), au dispositif de communication client (20) -- le dispositif de communication client (20) installe et/ou active le profil de communication correspondant à l'information de profil (220), en particulier en fonction de paramètres supplémentaires détectés par le dispositif de communication client (20), en particulier en fonction de la situation d'itinérance du dispositif de communication client (20) et/ou en fonction d'un indicateur de force du signal détecté par le dispositif de communication client (20).

6. Procédé selon l'une des revendications précédentes, dans lequel le module d'identité d'abonné intégré (21) du dispositif de communication client (20) correspond à un ou plusieurs des éléments suivants :
-- une carte à circuit intégré universel intégré amovible, eUICC amovible,
-- une carte à circuit intégré universel intégré non amovible, eUICC non amovible,
-- une carte à circuit intégré universel intégré intégrée, eUICC intégrée,
-- un module d'identité d'abonné intégré, SIM intégrée, dans lequel en particulier l'information d'identification (22) et l'information de certificat (24) et l'information de clé secrète (23) correspondent au module d'identité d'abonné intégré (21), et l'information de profil (220) étant utilisée dans ou par le module d'identité d'abonné intégré (21).

7. Procédé selon l'une des revendications précédentes, dans lequel le dispositif de communication client (20) est un dispositif de communication machine à machine ou un dispositif de communication de type machine, en particulier un dispositif de communication machine à machine ou un dispositif de communication de type machine étant un dispositif à ressources limitées.

8. Système de transmission d'une information de profil (220) ou d'au moins des parties de celle-ci à un dispositif de communication client (20), l'information de profil (220) étant transmise d'une entité serveur (140) à un autre dispositif de communication client (30) et de l'autre dispositif de communication client (30) au dispositif de communication client (20) en utilisant une interface de communication (25) entre l'autre dispositif de communication client (30) et le dispositif de communication client (20), dans lequel l'information de profil (220) est utilisée dans ou par un module d'identité d'abonné intégré (21) du dispositif de communication client (20), pour communiquer de manière opérationnelle avec un réseau de communication mobile (100) indépendamment de l'autre dispositif de communication client (30), dans lequel le dispositif de communication client (20) et/ou le module d'identité d'abonné intégré (21) du dispositif de communication client (20) est attribué à une information d'identification (22), dans lequel le système comprend le réseau de communication mobile (100), l'entité serveur (140), le dispositif de communication client (20), et l'autre dispositif de communication client (30), dans lequel l'information d'identification (22) est spécifique ou individuelle au dispositif de communication client (20) ou au module d'identité d'abonné intégré (21), dans lequel le système est configuré de telle sorte que :
-- l'information d'identification (22) est soit transmise, par le dispositif de communication client (20), à l'autre dispositif de communication client (30) en utilisant l'interface de communication (25), soit autrement transmise ou fournie à l'autre dispositif de communication client (30),
-- l'information d'identification (22) attribuée au dispositif de communication client (20) et une information de certificat (24) attribuée au dispositif de communication client (20) sont transmises, par l'autre dispositif de communication client (30), à l'entité serveur (140), dans lequel l'information de certificat (24) est soit transmise, par le dispositif de communication client (20), à l'autre dispositif de communication client (30), soit l'information de certificat (24) est demandée, par l'autre dispositif de communication client (30), à une entité serveur de certificat (160) et reçue par l'autre dispositif de communication client (30) de l'entité serveur de certificat (160), dans lequel l'information de certificat (24) correspond à une information de clé secrète (23) du dispositif de communication client (20) et/ou du module d'identité d'abonné intégré (21), l'information de certificat (24) correspondant et/ou comprenant une information de clé publique liée à l'information de clé secrète (23), dans lequel l'entité serveur (140) comprend ou est attribuée à ou est capable d'accéder à un générateur de profil (144), dans lequel le générateur de profil (144) génère l'information de profil (220) associée ou attribuée à l'information d'identification (22), l'information de profil (220) étant chiffrée et la clé de chiffrement étant tirée de l'information de certificat (24), précédemment reçue de l'autre dispositif de communication client (30),
**--** l'information de profil chiffrée (220) est transmise, par l'entité serveur (140), à l'autre dispositif de communication client (30),
-- l'information de profil chiffrée (220) est transmise, par l'autre dispositif de communication client (30), au dispositif de communication client (20).

9. Programme comprenant un code de programme lisible par ordinateur, qui, lorsqu'il est exécuté par un système comprenant un dispositif de communication client (20), un autre dispositif de communication client (30), une entité serveur (140), un générateur de profil (144), et une entité serveur de certificat (160), est configuré pour effectuer le procédé selon l'une quelconque des revendications 1 à 7.

10. Support lisible par ordinateur comprenant des instructions qui, lorsqu'elles sont exécutées par un système comprenant un dispositif de communication client (20), un autre dispositif de communication client (30), une entité serveur (140), un générateur de profil (144), et une entité serveur de certificat (160), amènent ledit système à effectuer le procédé selon l'une quelconque des revendications 1 à 7.
